# EUROPEAN PATENT SPECIFICATION

(11) **EP 3 699 555 B1**
(45) Date of publication and mention of the grant of the patent: **01.03.2023**
(21) Application number: 20150439.6
(22) Date of filing: 07.01.2020
(51) Int. Cl.: G01D 5/14, G01D 5/347, G01D 5/25, G01D 5/245, H01H 19/00, G01P 13/00

(54) **LIMIT SWITCH**
ENDSCHALTER
INTERRUPTEUR DE FIN DE COURSE

(30) Priority: 20.02.2019 IT 201900002467
(43) Date of publication of application: 26.08.2020
(73) Proprietor: Tecno Elettrica Ravasi S.r.l., 23887 Olgiate Molgora (LC) (IT)
(72) Inventor: BLASI, Flavio, 23887 Olgiate Molgora (LC) (IT)
(74) Representative: Gregorj S.r.l.

(56) References cited:
- EP-A1- 0 995 974
- EP-A1- 2 486 373
- WO-A1-2012/065955
- CN-U- 203 163 676
- US-A1- 2008 036 454
- US-A1- 2015 108 878
- US-A1- 2016 358 720

## Description

### Technical field of the invention

The present invention refers to a limit switch, particularly a position limit switch. In the present description and in the following claims, the term "limit switch" means an electromechanical device having an actuator mechanically connected to a plurality of electric contacts. If an object, by occupying determined positions, directly or indirectly comes in contact with the actuator, the limit switch acts on the electric contacts for opening or closing the electric connection.

### Prior art

Limit switches, which are often used as safety switches for example in the industrial field, for controlling operating machines, are known in the art.

The known limit switches have an actuator (wherein the term "actuator" must be understood with the hereinbefore given meaning, in other words as part of the limit switch, adapted to come in contact with and moved by an object of which the movement must be controlled, for example a movable portion of an operating machine) connected to one or more switches, which are open or closed by the actuator, if it is actuated. For example, in a known type of a position limit switch, known as cross switch, the actuator comprises two rods perpendicularly fixed to each other and attached to a shaft which is in turn is perpendicular to the two rods. The shaft is rotatable about its axis and is configured to take four predefined positions, obtained by rotating the shaft of an angle of 90°. Each time, due to the interaction of the object of which the movement must be controlled by the rods, the shaft jogs towards a predefined position and simultaneously actuates one or more switches by a cam mechanism.

Typically, the cross limit switches are provided with four switches, each being individually actuated if the actuator takes one of the four positions predefined at 90°.

There are position limit switches with more than four predefined positions, however such positions are required to be spaced by angles less than 90°, for example 60°, consequently the actuation is made more difficult. Substantially, the cross limit switches are advantageous because they are actuated by jogged rotations of 90°, corresponding to more reliable actuations.

A disadvantage of the known limit switches is the small number (typically three or four) of configurations which they can reliably encode. Consequently, with reference to complex plants, a plurality of limit switches should be installed, with the inherent drawback of the complexity of the required wires for ensuring an optimal operation of a plant.

EP2486373A1 relates to a position encoder for recording the position of a shaft that can be rotated around a rotation axis. The position encoder according to the invention has a lighting device and an optical sensor assembly for recording the multi-turn position of the shaft.

US2015108878A1 relates to methods and systems for measuring angular position including measuring an angular position within one rotation of a primary gear and a secondary gear that are meshed together.

EP0995974A1 relates to a rotation detector having an encoder shaft bearing code discs for single turn and multiturn measurements, respectively.

CN203163676U relates to a coding magnetic resistance combination type electronic stability program (ESP) absolute type multi-loop angle sensor.

US2008036454A1 relates to a rotation measurement system comprising a rotatable annular magnetic encoder carrying a series of encoding elements arranged around the circumference of the encoder according to a periodic pattern.

US2016358720A1 relates to an explosion proof cross-type limit switch having: a housing, a shaft coupled to an actuating lever outside the housing and rotatably mounted in a first bearing arrangement connected to the housing, a rotary switch arranged in the housing.

WO2012065955A1 relates to a transmission cam limit switch comprising: an input shaft that can be rotationally fixedly coupled to a corresponding drive shaft of a drive, a first transmission coupled to the input shaft, at least one cam disc coupled to a transmission output of the first transmission, at least one switching contact mechanically actuated by means of the cam disc.

### Brief summary of the invention

Therefore, an object of the present invention consists of providing a limit switch which is capable of more reliably coding a greater number of positions or configurations. The limit switch comprises an actuator having two actuating rods arranged as a cross.

This and other objects are met by a limit switch according to claim 1, and also by a corresponding method according to claim 3.

Dependent claims define possible advantageous embodiments of the invention-In essence, the idea underlying the present invention consists of providing a limit switch having a digital output coding N positions, in other words a plurality of positions with reference to the rotation of the shaft of the actuator.

### Brief description of the drawings

In order to better comprehend the invention and appreciate the advantages, some exemplifying non-limiting embodiments thereof will be explained in the following with reference to the attached figure, wherein:

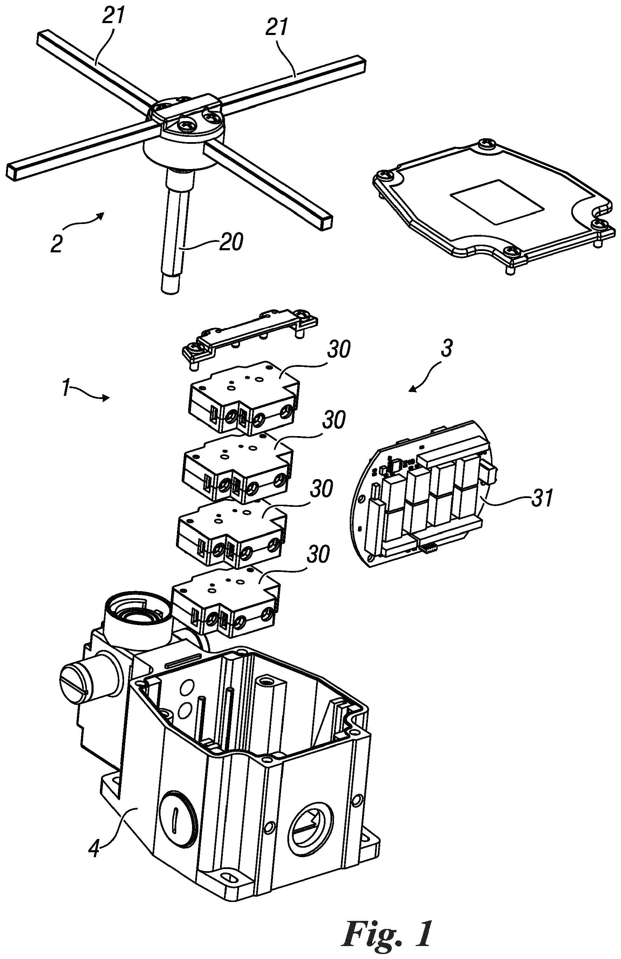

Figure 1 illustrates a perspective exploded view of a limit switch according to the invention.

### Description of the embodiments of the invention

A limit switch, particularly a position limit switch, according to the invention, is indicated in the figure by reference 1. The limit switch 1 can be of a type discussed in the preamble of the present description.

Generally, the limit switch 1 comprises an actuator 2 comprising a rotatable shaft 20 adapted to take a predetermined number of angular positions, and an output device 3 connected to said actuator, and adapted to sense the position of said actuator 2 and to output a signal corresponding to the position of the actuator 2.

In the illustrated example, the limit switch 1 is of a cross type, in other words the actuator 2 being provided with two actuating rods 21 arranged as a cross. The actuator is the portion of the limit switch adapted to interact, particularly to come in contact with a movable object, such as a portion of an operating machine, for controlling the movement therefor as a function of its position. Upon said interaction with the actuator, for example by the rods of the cross actuator, the shaft 20 is moved.

Preferably, the limit switch 1 comprises a body 4 formed in order to house said components, as illustrated in Figure 1. Such body 4 is of a standard type for a person skilled in this field.

As discussed in the preamble, the shaft 20 rotates, in other words rotates about its axis. In this context, a position of the shaft means the angular position which it takes.

According to the present invention, the output device 3 is of a digital type, adapted to output a digital signal. Consequently, solutions by which the actuator 2 is not required to jog can be provided, or in which a position of the shaft 20 corresponds to more than one configuration of the system to which the limit switch 1 is associated.

Preferably, the output device 3 is adapted to sense the position of the shaft 20 of the actuator 2 in several turns.

According to the invention, the output device 3 comprises at least three switches 30 and an electronic circuit 31 connected to the switches 30 themselves and adapted to simultaneously sense the open/closed state of all the switches 30.

For example, it is considered a cross limit switch as shown in Figure 1, which comprises four known switches 30 (for example jog microswitches or of another type) to which the electronic circuit 31 is connected. Such electronic circuit 31 is suitably provided with a plurality of output elements, and with an internal counter.

At each partial rotation or jog, of the shaft 20 of the actuator 2, the electronic circuit 31 is capable of sensing the rotation sense of the shaft 20 and consequently of increasing or decreasing the internal counter.

The value of the counter is encoded into a binary format and is provided as an output of the electronic board by the output elements, which preferably are relays or another type of clean contact.

Using clean contacts is advantageous for a final user which can use them as desired. Generally, the information provided at the output of the output elements is read by a PLC installed in the plant to which the limit switch 1 is destined to be mounted or by a unit dedicated to this purpose.

Advantageously, the output elements are of a type with a digital binary notation. Consequently, the number of positions which can be managed by the electronic circuit 31 depends on the number of output elements according to the formula 2ⁿ, wherein n is the number of output elements.

The electronic circuit 31, by analyzing the state of the switches 30, firstly is capable of distinguishing the rotation direction of the shaft 20 of the actuator 2, and secondly it counts the different following positions by taking into account the direction.

Since the mechanical switches 30 actuated by the cams are used so that the electronic circuit can count the number of actuations, and simultaneously distinguish the rotation sense of the shaft 20, the number of such switches 30 is assumed equal to three or more.

According to a possible embodiment of the invention, the limit switch 1 is also provided with a digital input set to zero, which is useful for resetting the actuator 2 position at any point.

According to a further possible embodiment, the electronic circuit 31 comprises a relay channel acting as a diagnostics line signaling electronic faults. By this diagnostics line, the PLC is capable of protecting the plant against an unexpected problem in the processor of the electronic circuit 31.

It is also possible to provide the electronic circuit 31 with a digital debouncing filter for each channel in order to eliminate spurious pulses of a switching electromechanical microswitch.

An advantage of the limit switch 1 according to the invention enables to identify more positions or configurations than a limit switch of the prior art. Due to the present invention, it is possible to simply provide a complex industrial system or plant with a reliable safety switch.

Another advantage of the limit switch 1 according to the invention is the possibility of integrating it in existing machines.

In addition, it is noted that a limit switch 1, as the one hereinbefore described and shown in the figure, is considered as a low-resolution absolute transducer. This is a premium to the final user because enables he/she to use a single electronic limit instead of a plurality of conventional limits.

Moreover, the limit switch 1 according to the invention, since can be considered as an absolute transducer, has the same advantages. Specifically, after an interruption of the power supply to a plant, the limit switch 1 starts again exactly from the position it had before the interruption, this enables to dispense with expensive and bulky gears and their adaption to the plant.

The present invention refers also to a method of operating a hereinbefore described limit switch 1. The method comprises the step of sensing the position of the actuator and to output a digital signal corresponding to the position of the actuator by an output device connected to the actuator.

As already discussed, the principle underlying the invention consists of providing to output a digital signal corresponding to a position of the actuator.

Preferably, the step of sensing the actuator position provides to sense the actuator position in several turns on its shaft.

The output device comprises at least three switches and an electronic circuit connected to the switches themselves.

In this latter case, preferably the method provides to simultaneously sense the open/closed state of all the switches. The sensing step is performed as already said, by the electronic circuit.

A person skilled in the art in order to meet specific contingent needs, can introduce many additions, modifications, or substitutions of elements with other operatively equivalent ones to the described embodiments of the limit switch, without departing from the scope of the attached claims.

## Claims

1. Limit switch comprising:
- an actuator (2) comprising a rotatable shaft (20) suitable to take a predetermined number of angular positions, the actuator (2) comprising two actuating rods (21) arranged as a cross;
- an output device (3) connected to said actuator (2), and suitable to sense the position of said actuator (2) and to output a signal corresponding to the actuator (2) position;
wherein said output device (3) is of a digital type, suitable to output a digital signal,
wherein the output device (3) comprises at least three switches (30) and an electronic circuit (31) connected to said switches (30) and suitable to simultaneously sense the open/closed state of all the switches (30),
wherein the electronic circuit (31) comprises a plurality of output elements and an internal counter,
wherein the electronic circuit (31) is adapted, at each partial rotation or jog, to detect the direction of rotation of the shaft (20) and to increase or decrease said internal counter accordingly, and
wherein the value of the counter is encoded into a binary format and is provided as an output by said output elements.

2. Limit switch according to claim 1, wherein the output device (3) is suitable to sense the actuator (2) position in several turns.

3. Method of operating a limit switch comprising an actuator (2) mounted to a rotatable shaft (20), the actuator (2) comprising two actuating rods (21) arranged as a cross, and suitable to take a predetermined number of angular positons; said method comprising the steps of sensing the position of said actuator (2) and of outputting a digital signal corresponding to the position of said actuator (2), by an output device (3) connected to the actuator (2),
wherein the output device (3) comprises at least three switches (30) and an electronic circuit (31) connected to said switches (30), the method providing to simultaneously sense the open/closed state of all the switches (30),
wherein the electronic circuit (31) comprises a plurality of output elements and an internal counter,
the method comprising, at each partial rotation or jog and by means of the electronic circuit (31), the steps of detecting the direction of rotation of the shaft (20) and increasing or decreasing said internal counter accordingly, and
the method further comprising encoding the value of the counter into a binary format and provide it as an output by the output elements.

4. Method according to claim 3, wherein the step of sensing the actuator (2) position, provides to sense the actuator (2) position in several turns.

## Patentansprüche

1. Endschalter, umfassend:
- einen Aktuator (2), umfassend eine drehbare Welle (20), die dazu geeignet ist, eine zuvor bestimmte Anzahl von Winkelpositionen einzunehmen, der Aktuator (2) umfassend zwei Betätigungsstangen (21), die als ein Kreuz angeordnet sind;
- eine Ausgabevorrichtung (3), die mit dem Aktuator (2) verbunden ist und geeignet ist, um die Position des Aktuators (2) zu erfassen und ein Signal auszugeben, das der Aktuator (2)-position entspricht;
wobei die Ausgabevorrichtung (3) von einem digitalen Typ ist, der geeignet ist, um ein digitales Signal auszugeben,
wobei die Ausgabevorrichtung (3) mindestens drei Schalter (30) und eine elektronische Schaltung (31) umfasst, die mit den Schaltern (30) verbunden ist und geeignet ist, um gleichzeitig den offenen/geschlossenen Zustand von all den Schaltern (30) zu erfassen,
wobei die elektronische Schaltung (31) eine Vielzahl von Ausgabeelementen und einen internen Zähler umfasst,
wobei die elektronische Schaltung (31) an jeder Teildrehung oder -ausklinkung angepasst ist, um die Drehrichtung der Welle (20) zu erfassen und den internen Zähler demgemäß zu erhöhen oder zu verringern, und
wobei der Wert des Zählers in ein binäres Format codiert wird und als eine Ausgabe von den Ausgabeelementen bereitgestellt wird.

2. Endschalter nach Anspruch 1, wobei die Ausgabevorrichtung (3) geeignet ist, um die Aktuator (2)-position in einigen Windungen zu erfassen.

3. Verfahren zum Betreiben eines Endschalters, umfassend einen Aktuator (2), der an einer drehbaren Welle (20) montiert ist, der Aktuator (2) umfassend zwei Betätigungsstangen (21), die als ein Kreuz angeordnet und geeignet sind, um eine zuvor bestimmte Anzahl von Winkelpositionen einzunehmen; das Verfahren umfassend die Schritte des Erfassens der Position des Aktuators (2) und das Ausgeben eines digitalen Signals, das der Position des Aktuators (2) entspricht, durch eine Ausgabevorrichtung (3), die mit dem Aktuator (2) verbunden ist,
wobei die Ausgabevorrichtung (3) mindestens drei Schalter (30) und eine elektronische Schaltung (31) umfasst, die mit den Schaltern (30) verbunden ist, wobei das Verfahren das gleichzeitige Erfassen des offenen/geschlossenen Zustands von all den Schaltern (30) vorsieht,
wobei die elektronische Schaltung (31) eine Vielzahl von Ausgabeelementen und einen internen Zähler umfasst,
das Verfahren umfassend, bei jeder Teildrehung oder -ausklinkung und mittels der elektronischen Schaltung (31), die Schritte des Erfassens der Drehrichtung der Welle (20) und des demgemäßen Erhöhens oder Verringerns des internen Zählers, und
das Verfahren ferner umfassend das Codieren des Werts des Zählers in ein binäres Format und das Bereitstellen von diesem als eine Ausgabe durch die Ausgabeelemente.

4. Verfahren nach Anspruch 3, wobei der Schritt des Erfassens der Aktuator (2)-position das Erfassen der Aktuator (2)-position in einigen Windungen vorsieht.

## Revendications

1. Interrupteur de fin de course comprenant :
- un actionneur (2) comprenant un arbre rotatif (20) adapté pour prendre un nombre prédéterminé de positions angulaires, l'actionneur (2) comprenant deux tiges d'actionnement (21) agencées en croix ;
- un dispositif de sortie (3) connecté audit actionneur (2), et adapté pour détecter la position dudit actionneur (2) et pour délivrer un signal correspondant à la position de l'actionneur (2) ;
dans lequel ledit dispositif de sortie (3) est d'un type numérique, adapté pour délivrer un signal numérique,
dans lequel le dispositif de sortie (3) comprend au moins trois interrupteurs (30) et un circuit électronique (31) connecté auxdits interrupteurs (30) et adaptés pour détecter simultanément l'état ouvert/fermé de tous les interrupteurs (30),
dans lequel le circuit électronique (31) comprend une pluralité d'éléments de sortie et un compteur interne,
dans lequel le circuit électronique (31) est conçu, à chaque rotation partielle ou déplacement, pour détecter le sens de rotation de l'arbre (20) et pour augmenter ou diminuer ledit compteur interne en conséquence, et
dans lequel la valeur du compteur est codée en un format binaire et est fournie en tant que sortie par lesdits éléments de sortie.

2. Interrupteur de fin de course selon la revendication 1, dans lequel le dispositif de sortie (3) est adapté pour détecter la position de l'actionneur (2) en plusieurs spires.

3. Procédé de fonctionnement d'un interrupteur de fin de course comprenant un actionneur (2) monté sur un arbre rotatif (20), l'actionneur (2) comprenant deux tiges d'actionnement (21) agencées en croix, et adapté pour prendre un nombre prédéterminé de positions angulaires, ledit procédé comprenant les étapes consistant à détecter la position dudit actionneur (2) et à délivrer un signal numérique correspondant à la position dudit actionneur (2), par un dispositif de sortie (3) connecté à l'actionneur (2),
dans lequel le dispositif de sortie (3) comprend au moins trois interrupteurs (30) et un circuit électronique (31) connecté auxdits interrupteurs (30), le procédé fournissant la détection simultanée de l'état ouvert/fermé de tous les interrupteurs (30),
dans lequel le circuit électronique (31) comprend une pluralité d'éléments de sortie et un compteur interne,
le procédé comprenant, à chaque rotation partielle ou au moyen du circuit électronique (31), les étapes de détection du sens de rotation de l'arbre (20) et d'augmentation ou de diminution dudit compteur interne en conséquence, et
le procédé comprenant en outre le codage de la valeur du compteur en un format binaire et la fourniture de celui-ci en tant que sortie par les éléments de sortie.

4. Procédé selon la revendication 3, dans lequel l'étape de détection de la position de l'actionneur (2), fournit la détection de la position de l'actionneur (2) en plusieurs spires.
